# EUROPÄISCHE PATENTSCHRIFT

(11) **EP 2 497 652 B1**
(45) Veröffentlichungstag und Bekanntmachung des Hinweises auf die Patenterteilung: **06.05.2015**
(21) Anmeldenummer: 12001555.7
(22) Anmeldetag: 07.03.2012
(51) Int. Cl.: B60B 27/04

(54) **Nabe für ein Fahrrad**
Collar for a bicycle
Moyeu pour un vélo

(30) Priorität: 10.03.2011 DE 102011013536
(43) Veröffentlichungstag der Anmeldung: 12.09.2012
(73) Patentinhaber: DT Swiss AG, 2500 Biel (CH)
(72) Erfinder: Spahr, Stefan, 2543 Lengnau (CH); Gasser, Thomas, 3036 Detligen (CH)
(74) Vertreter: BSB Intellectual Property Law

(56) Entgegenhaltungen:
- CN-U- 201 538 196
- CN-U- 201 646 249
- DE-A1- 4 430 565
- DE-U1-202010 000 533
- US-A1- 2001 005 098

## Beschreibung

Die vorliegende Erfindung betrifft eine Nabe für den Einsatz an einem wenigstens teilweise muskelbetriebenen Zweirad und insbesondere einem Fahrrad.

Aus der CN 201 538 196 U ist eine Nabe bekannt geworden, bei der an den beiden Enden einer zentralen Hülse Nabenflansche auf die Hülse aufgeschoben sind.

Die DE 20 2010 000533 U1 offenbart eine Radnabe mit einem Nabenmittelteil, an dessen axialen Enden Endstücke aufgeschoben und dort befestigt werden.

In der US 2001/0005098 A1 wird eine Nabe gezeigt, bei eine Hülse auf die Enden der Nabenflansche aufgesteckt wird.

Im professionellen Bereich der Fahrradsportler, aber auch im sportlichen Bereich wird zunehmend ein erhebliches Gewicht auf leichte und dennoch feste Komponenten gelegt. Je leichter die Komponenten, desto größer ist die mögliche Beschleunigung und es können auch höhere Maximale- und Durchschnittsgeschwindigkeiten erreicht werden.

Eine wichtige Komponente bei der Reduktion des Gewichts sind die verwendeten Naben, die einerseits hohen und höchsten Belastungen Stand halten müssen, aber andererseits nicht unbeträchtlich zu dem Gesamtgewicht beitragen.

Zur Verringerung des Gesamtgewichts einer Nabe sind deshalb im Stand der Technik Naben bekannt geworden, deren Gehäuse teilweise oder vollständig aus einem Faserverbundwerkstoff bestehen. Da die die beiden Nabenflansche verbindende Nabenhülse einen erheblichen Gewichstanteil an der Nabe hat, sind auch Naben bekannt geworden, bei denen die Nabenhülse zwischen den Speichenflanschen aus einem Faserverbundwerkstoff oder einem anderen leichten Material besteht. Bei den bekannten Naben wird die Carbonhülse in eine Aufnahmebohrung der Nabenendteile eingesteckt und dort eingeklebt. Um eine vernünftige Klebung zu gewährleisten, wird ein erheblicher Spalt in radialer Richtung zwischen dem Außendurchmesser der Carbonhülse und dem Innendurchmesser des Aufnahmeloches vorgesehen. Dadurch kann eine vernünftige Klebung gewährleistet werden.

Nachteilig daran ist allerdings, dass die Naben- bzw. Speichenflansche an der Nabenhülse über eine erhebliche Menge an Klebstoff gehalten werden und das ein erheblicher Durchmesser unterschied zwischen der Nabenhülse und der Aufnahmeöffnung in dem Nabenendteil nötig ist. Deshalb wird eine aufwendige Ausrichtung der einzelnen Teile beim Klebevorgang nötig, um die erforderliche Konzentrizität sicher zu stellen. Dadurch kann eine optisch ansprechende und funktionelle Verbundnabe gewährleistet werden.

Der Nachteil daran ist, dass ein erheblicher manueller Justageaufwand zur Herstellung der Nabe erforderlich ist, was den Aufwand bei der Herstellung weiter erhöht.

Es ist deshalb die Aufgabe der vorliegenden Erfindung eine mehrteilige Nabe zur Verfügung zu stellen, welche ein geringes Gewicht aufweist und einen geringeren Justageaufwand erfordert.

Diese Aufgabe wird gelöst durch eine erfindungsgemäße Nabe mit den Merkmalen des Anspruchs 1 und des Anspruchs 13. Bevorzugte Weiterbildungen der Erfindung sind Gegenstand der Unteransprüche. Weitere Vorteile und Merkmale der Erfindung ergeben sich aus der allgemeinen Beschreibung und der Beschreibung eines Ausführungsbeispiels.

Die erfindungsgemäße Nabe ist insbesondere für den Einsatz an einem Zweirad und insbesondere an einem muskelbetriebenen Zweirad wie einem Fahrrad vorgesehen. Die erfindungsgemäße Nabe umfasst ein Nabengehäuse, wobei das Nabengehäuse zwei Endeinheiten und wenigstens ein Mittelteil umfasst. Dabei ist das Mittelteil im montierten Zustand zwischen den Endeinheiten angeordnet und daran aufgenommen. Wenigstens eine Endeinheit umfasst einen rohrförmigen Einsteckabschnitt, auf den das Mittelteil mit einem rohrförmigen Aufsteckabschnitt aufgesteckt ist. Dabei überlappen sich der Einsteckabschnitt und der Aufsteckabschnitt in einem Überlappungsbereich. Der Überlappungsbereich umfasst einen Führungsabschnitt und einen Klebeabschnitt.

Die erfindungsgemäße Nabe hat viele Vorteile, da sie einen einfachen Aufbau und eine unaufwendige Montage ermöglicht. Dadurch können die Herstellkosten gesenkt werden, während es gleichzeitig möglich ist, das Gesamtgewicht der Nabe zu reduzieren.

Die erfindungsgemäße Ausgestaltung ist besonders vorteilhaft, da nicht der gesamte Überlappungsbereich als Klebeabschnitt mit einer erheblichen Dicke des aufgetragenen Klebers vorgesehen wird, sondern es wird ein Führungsabschnitt zur Verfügung gestellt, der die Führung und Justage erheblich erleichtert. Durch den Führungsabschnitt kann die Nabe aus ihren Einzelteilen zusammengebaut und mit dem Kleber zum Kleben versorgt werden, ohne das eine weitere Justage über Lehren erforderlich wird.

Ein weiterer erheblicher Vorteil besteht darin, dass weniger und in der Regel keine Nacharbeit erforderlich ist, da ein Entfernen von Leimresten nicht nötig ist.

Das Mittelteil ist insbesondere hohl und vorzugsweise rohrförmig gestaltet. Es kann einen zylindrischen, runden oder sonstigen Querschnitt aufweisen.

Erfindungsgemäß ist an dem Führungsabschnitt eine geringere Durchmessertoleranz zwischen dem Einsteckabschnitt und dem Aufsteckabschnitt als an dem Klebeabschnitt vorgesehen. Beispielsweise ist es möglich, dass sowohl der Führungsabschnitt als auch der Klebeabschnitt als zylindrische Abschnitte aus geführt sind. Dann liegen an dem Führungsabschnitt geringere Unterschiede zwischen den Durchmessern des Aufsteckabschnitts und des Einsteckabschnitts vor als in dem Klebeabschnitt.

Möglich ist es aber auch, dass an dem Führungsabschnitt der Aufsteckabschnitt und/oder der Einsteckabschnitt über Führungszähne, Erhebungen oder Vertiefungen oder dergleichen örtlich unterschiedliche Durchmesser aufweisen, sodass die Toleranz der beiden ineinander gesteckten Komponenten gegen eine radiale Verschiebung an dem Führungsabschnitt erheblich geringer als an dem Klebeabschnitt ist.

Dadurch wird bei einer sorgfältigen Montage der aufwendige Einsatz von Lehren oder Prüfwerkzeugen zum exakten Aufbau der Nabe überflüssig.

Vorzugsweise weist der Einsteckabschnitt an dem Überlappungsbereich gestufte Außendurchmesser auf und/oder der Aufsteckabschnitt weist einen konstanten Innendurchmesser auf. Beispielsweise kann der Einsteckabschnitt an dem Überlappungsbereich zwei unterschiedliche Außendurchmesser aufweisen, während der Aufsteckabschnitt einen konstanten Innendurchmesser aufweist. Dabei ist der größere Außendurchmesser des Einsteckabschnitts vorzugsweise passgenau an den konstanten Innendurchmesser des Aufsteckabschnitts angepasst, sodass in dem Überlappungsabschnitt des größeren Außendurchmessers mit dem konstanten Innendurchmesser des Aufsteckabschnitts eine erheblich größere Passgenauigkeit erzielt wird, wodurch der Führungsabschnitt realisiert wird.

Werden an beiden Enden des Mittelteils solche vergrößerten Außendurchmesser an dem Einsteckabschnitt vorgesehen, so wird die Nabe insgesamt bei der Montage definiert gehalten. Der Klebeabschnitt, an dem ein verringerter Außendurchmesser des Einsteckabschnitts vorliegt, ermöglicht hingegen die Aufnahme einer genügenden Menge des vorgesehenen Klebematerials, um einen zuverlässigen und dauerhaften sicheren Halt der einzelnen Nabenteile zueinander zu ermöglichen.

Der Einsteckabschnitt und der Aufsteckabschnitt weisen besonders bevorzugte runde und insbesondere zylindrische Querschnitte auf. In Varianten ist es aber auch möglich, dass ovale oder eckige Querschnitte vorgesehen sind.

In allen Ausgestaltungen ist es besonders bevorzugt, dass die Durchmesserdifferenz zwischen dem Innendurchmesser des Aufsteckabschnitts und dem Außendurchmesser des Einsteckabschnitts in dem Klebeabschnitt zwischen 0,2 Prozent und etwa 2 Prozent des Innendurchmessers des Aufsteckabschnitts beträgt. Beispielsweise kann in einem konkreten Beispiel bei einem Durchmesser von etwa 25 bis 30 mm der Durchmesserunterschied zwischen dem Bereich mit größerem Außendurchmesser und dem Bereich mit geringerem Außendurchmesser zwischen etwa 0,1 und 0,4 mm betragen, kann aber auch größer oder kleiner sein. Die genauen Abmessungen hängen auch vom eingesetzten Klebstoff ab.

Vorteilhafterweise ist die axiale Breite des Führungsabschnitts kleiner als die axiale Breite des Klebeabschnitts. Dabei kann die axiale Breite des Führungsabschnitts in bevorzugten Ausgestaltungen zwischen etwa 1/10 und 1/2 der Gesamtbreite des Führungsabschnitts und des Klebeabschnitts betragen. In einer konkreten Ausgestaltung kann die axiale Breite des Führungsabschnitts beispielsweise 2 mm betragen, während die axiale Breite des Klebeabschnitts zwischen 4 und 12 mm beträgt.

In allen Ausgestaltungen ist es besonders bevorzugt, dass das Mittelteil wenigstens teilweise aus wenigstens einem Faserverbundwerkstoff besteht. Dabei ist der Einsatz unterschiedlichster Materialien möglich und bevorzugt. Das Mittelteil kann aus thermoplastischen oder duroplastischen oder sonstigen Kunststoffen bestehen, die insbesondere mit Verstärkungsfasern verstärkt sind. Möglich ist die Herstellung aus eine einzigen oder aus mehreren Lagen solcher Faserverbundwerkstoffe.

Insbesondere ist der Führungsabschnitt an einem axialen Ende des Überlappungsbereichs angeordnet. Besonders bevorzugt ist der Führungsabschnitt an einem axialen Ende des Mittelteils vorgesehen, wenn sich die Nabe im zusammengebauten Zustand befindet.

Besonders bevorzugt ist er Führungsabschnitt axial weiter außen als der Klebeabschnitt vorgesehen. Möglich ist es aber auch, dass der Führungsabschnitt am axial inneren Ende des Überlappungsbereichs vorgesehen ist.

Möglich und bevorzugt ist es auch, dass der Aufsteckabschnitt an dem Überlappungsbereich gestufte Innendurchmesser aufweist, und/oder dass der Einsteckabschnitt einen konstanten Außendurchmesser aufweist. Bei einer solchen Ausgestaltung wird der Führungsabschnitt über einen verkleinerten Innendurchmesser des Aufsteckabschnitts realisiert. Bei solchen Ausgestaltungen ist es bevorzugt, dass der Führungsabschnitt axial weiter innen vorgesehen ist als der Klebeabschnitt, um einen Abstreifen des Klebers bei der Montage möglichst zu verhindern.

Es ist möglich, dass an dem Mittelteil wenigstens eine Hülse aufgenommen ist, welche insbesondere metallisch ausgebildet ist. Über eine solche Hülse, die bei der Herstellung des Mittelteils in das Faserverbundmaterial eingewickelt werden kann, kann ein definierter Sitz des Mittelteils an der fertigen Nabe gewährleistet werden, da bei der Herstellung des Mittelteils die Hülse bzw. die Hülsen definiert in das Mittelteil integriert werden.

Eine andere erfindungsgemäße Nabe weist ein Nabengehäuse auf, wobei das Nabengehäuse zwei Endeinheiten und wenigstens ein Mittelteil umfasst. Das Mittelteil ist zwischen den Endeinheiten angeordnet und daran aufgenommen. Wenigstens eine Endeinheit umfasst einen rohrförmigen Aufsteckabschnitt, in den das Mittelteil mit einem rohrförmigen Einsteckabschnitt eingesteckt ist, wobei sich der Einsteckabschnitt und der Aufsteckabschnitt in einem Überlappungsbereich überlappen und in dem überlappungsbereich ein Führungsabschnitt und ein Klebeabschnitt vorgesehen sind. Erfindungsgemäß ist an dem Führungsabschnitt eine geringere Durchmessertoleranz zwischen dem Einsteckabschnitt und dem Aufsteckabschnitt als an dem Klebeabschnitt vorgesehen.

Eine solche Nabe ist grundsätzlich ähnlich zu der oben angeführten Nabe aufgebaut. Der Einsteckabschnitt und der Aufsteckabschnitt wirken zusammen. Durch den Führungsabschnitt und den Klebeabschnitt werden eine hohe Montagegenauigkeit und die erforderliche Klebefestigkeit gewährleistet. Wichtig ist, dass zwei Steckabschnitte miteinander zusammenwirken. Dabei ist ein Steckabschnitt als Einsteckabschnitt und es ist einer als Aufsteckabschnitt ausgebildet.

Insgesamt stellt die Erfindung ein insbesondere geklebtes Nabengehäuse zur Verfügung, welches einfach aufzubauen und zu montieren ist und ein reduziertes Gewicht ermöglicht. Dabei wird mit geringem Montageaufwand eine hohe Genauigkeit erzielt, sodass eine reproduzierbare Konzentrizität gewährleistet werden kann.

Weitere Vorteile und Merkmale der Erfindung ergeben sich aus dem Ausführungsbeispiel, welches mit Bezug auf die beiliegenden Figuren im Folgenden erläutert wird.

In den Figuren zeigen:
- Fig. 1: ein Fahrrad miterfindungsgemäßen Naben;
- Fig. 2: ein weiteres Fahrrad mit.erfindungsgemäßen Naben;
- Fig. 3: eine perspektivische Ansicht einer erfindungsgemäßen Hinterradnabe;
- Fig. 4: eine Seitenansicht der Nabe gemäß Figur 3;
- Fig. 5: einen Querschnitt durch die Nabe nach Figur 3;
- Fig. 6: das Detail X aus Figur 5 in vergrößerter Darstellung;
- Fig. 7: eine erfindungsgemäße Vorderradnabe;
- Fig. 8: das Detail X aus Figur 7;
- Fig. 9: eine schematische geschnittene Darstellung des Überlappungsbereichs einer erfindungsgemäßen Nabe;
- Fig. 10: eine schematisch geschnittene Darstellung eines weiteren Überlappungsbereichs;
- Fig. 11: eine schematische Darstellung eines dritten Überlappungsbereichs; und
- Fig. 12: eine schematische Darstellung eines vierten Überlappungsbereichs.

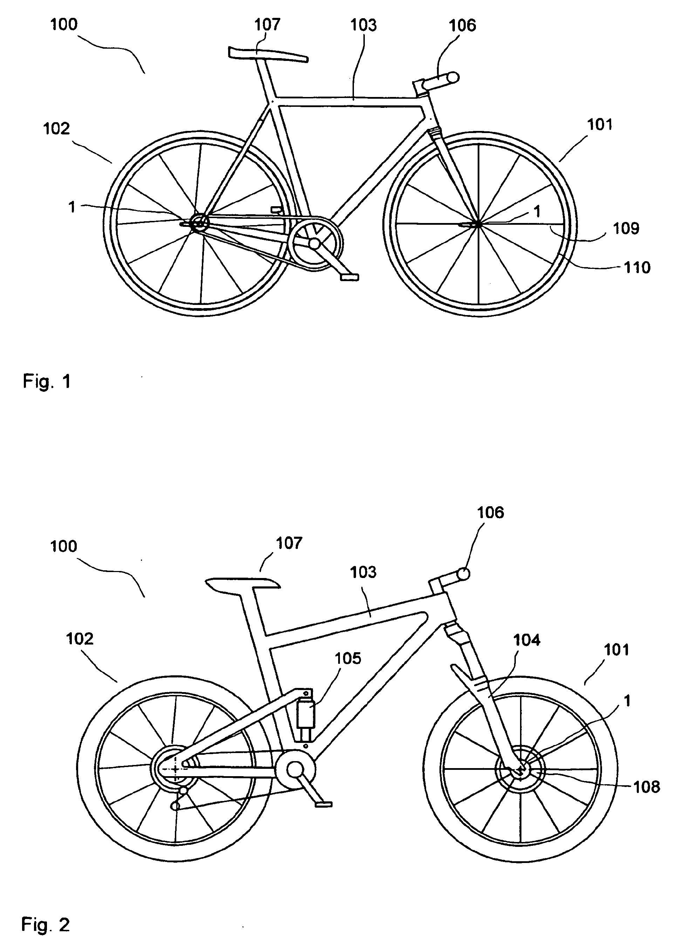

Mit Bezug auf die beiliegenden Figuren 1 bis 12 werden Ausführungsbeispiele erfindungsgemäßer Naben 1 anhand des Einsatzes an Fahrrädern 100 erläutert.

In Figur 1 ist ein als Touren- oder Rennrad abgebildetes Fahrrad 100 dargestellt, welches mit erfindungsgemäßen Naben 1 ausgerüstet ist. Das Fahrrad 100 in Figur 1 verfügt über ein Vorderrad 101 und ein Hinterrad 102, die an einem Rahmen 103 gehalten sind. Weiterhin ist ein Lenker 106 und ein Sattel 107 vorgesehen. Am Vorderrad 101 und am Hinterrad 102 ist jeweils eine Felge 110 vorgesehen, die über Speichen 109 mit der Nabe 1 verbunden ist. Am Vorderrad 101 ist hier eine radiale Verspeichung vorgesehen, während an dem Hinterrad die Speichen wenigstens teilweise tangential an der Nabe angeordnet sind, um die Übertragung von Drehmoment zu ermöglichen.

In Figur 2 ist einer schematischen Darstellung ein Mountainbike als Fahrrad 100 abgebildet, welches ebenfalls über ein Vorderrad 101 und ein Hinterrad 102 verfügt. Das Vorderrad wird an einer Federgabel 104 gefedert gehalten, während für die Dämpfung des Hinterrades ein Dämpfer 105 zur Verfügung steht. Eine Scheibenbremse 108 dient zur effektiven Bremsung des Fahrrads 100.

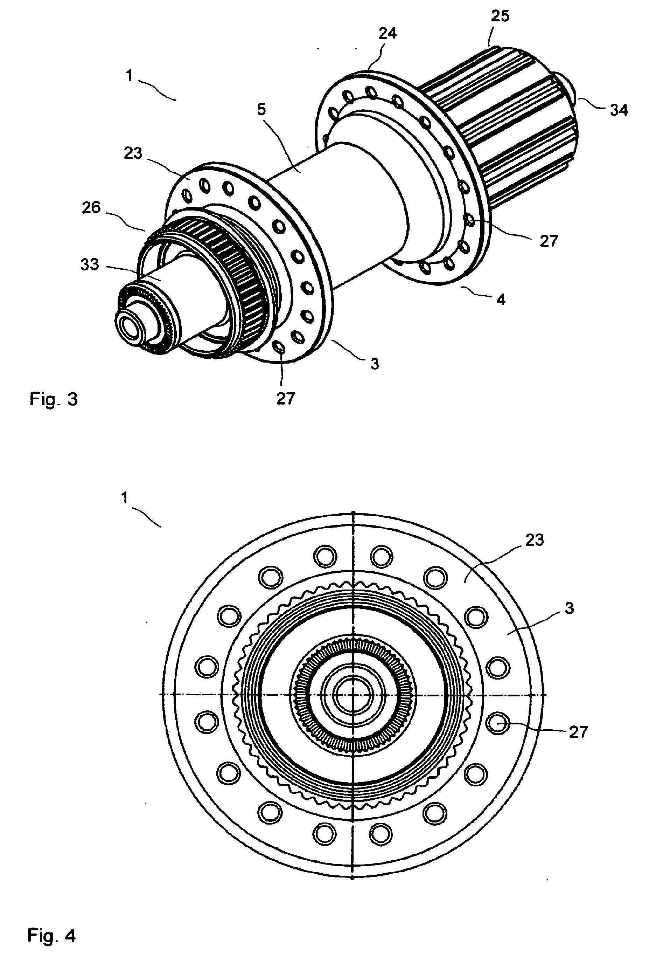

Figur 3 zeigt eine perspektivische Ansicht einer als Hinterradnabe ausgeführten erfindungsgemäßen Nabe 1 für z. B. das Fahrrad 100 nach Fig. 1 oder Fig. 2. Die Nabe 1 verfügt über ein Mittelteil 5 als Nabenhülse, wobei die Nabenhülse 5 an zwei Endeinheiten 3 und 4 befestigt ist. Die Endeinheiten 3 und 4 verfügen über Nabenflansche 23 bzw. 24, die mit Speichenlöchern 27 versehen sind, um die Nabe 1 über Speichen 109 mit einer Felge 110 zuverbinden. Hier im Ausführungsbeispiel sind Adapterstücke 33 und 34 an den axialen Enden der Nabe 1 vorgesehen, mit denen die Nabe 1 an den Ausfallenden des Rahmens 103 befestigt wird. Die Scheibenbremsenaufnahme 26 dient zur Befestigung einer Scheibenbremse 108.

Figur 4 zeigt eine Seitenansicht auf die Nabe gemäß Figur 3, wobei der Nabenflansch 23 an der Endeinheit 3 mit den Speichenlöchern 27 erkennbar ist.

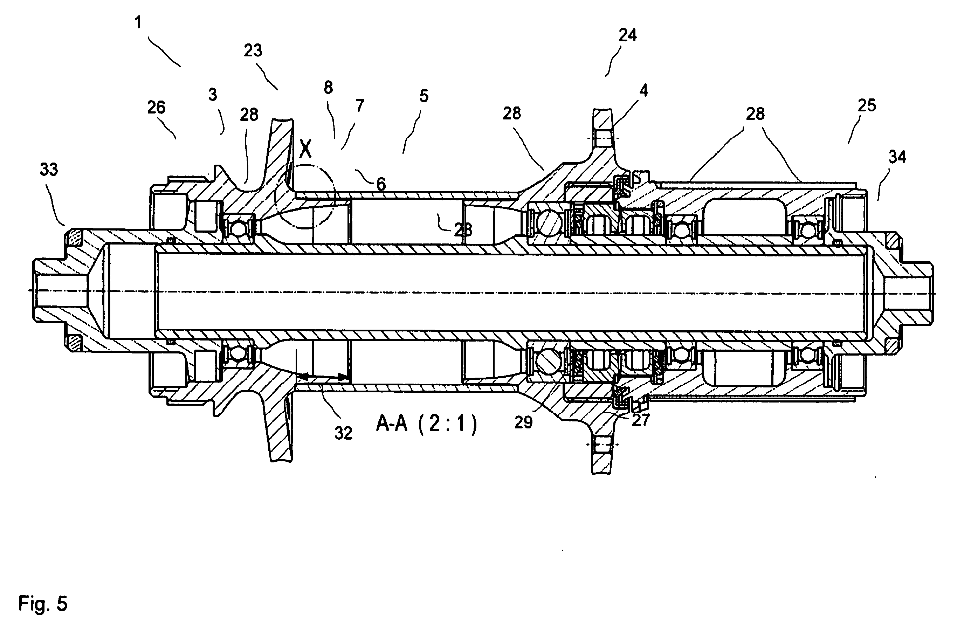

In Figur 5 ist ein Querschnitt durch die Nabe 1 abgebildet. Die Nabenhülse bzw. das Mittelteil 5 besteht hier aus einem Faserverbundwerkstoff und bildet eine leichte und dennoch hochfeste Verbindung zwischen den Endeinheiten 3 und 4 der Nabe 1.

An den Endeinheiten 3 und 4 wird die Nabe 1 über Lager 28 gegenüber der als Hohlachse ausgeführten Achse 30 drehbar aufgenommen. Die Hohlachse 30 kann aus einer metallischen Legierung und insbesondere einem Leichtmetall bestehen, kann aber auch wenigstens aus einem oder mehreren Faserverbundmaterialien bestehen.

Die Endeinheiten 3 und 4 bestehen vorzugsweise wenigstens im Wesentlichen aus einer Leichtmetalllegierung, können aber auch teilweise oder ganz aus Faserverbundwerkstoff bestehen.

An einem axialen Ende der Nabe 1, an dem das Adapterstück 34 vorgesehen ist, wird der Rotor 25 angeordnet, der zur Aufnahme von einem oder mehreren Ritzeln dient.

Der Aufbau der erfindungsgemäßen Nabe 1 ist hier derart, dass die zur Lagerung eingesetzten Komponenten an den Endeinheiten 3 und 4 vorgesehen sind, sodass die Nabenhülse als Mittelteil 5 als leichter aber fester Abstandshalter dient.

Zur Befestigung des Mittelteils 5 an den Endeinheiten 3 und 4 sind an beiden axialen Enden des Mittelteils 5 jeweils Überlappungsbereiche 8 vorgesehen, an denen Einsteckabschnitte 6 der Endeinheiten 3 und 4 mit Aufsteckabschnitten 7 der Nabenhülse 5 zusammenwirken. Zur Montage wird dabei der Einsteckabschnitt 6 einer Endeinheit 3, 4 in den Aufsteckabschnitt 7 der Nabenhülse eingeführt, nachdem ein Ein-, Zwei- oder Mehrkomponentenkleber auf den Einsteckabschnitt oder in den Aufsteckabschnitt eingebracht wurde, um eine dauerhaft sichere Verbindung der Nabenhülse 5 mit der jeweiligen Endeinheit 3 bzw. 4 zu gewährleisten.

Hier im Ausführungsbeispiel ist als Freilauf ein Zahnscheibenfreilauf 29 vorgesehen, der über zwei mit Stirnverzahnungen versehene Zahnscheiben für einen sicheren Betrieb sorgt.

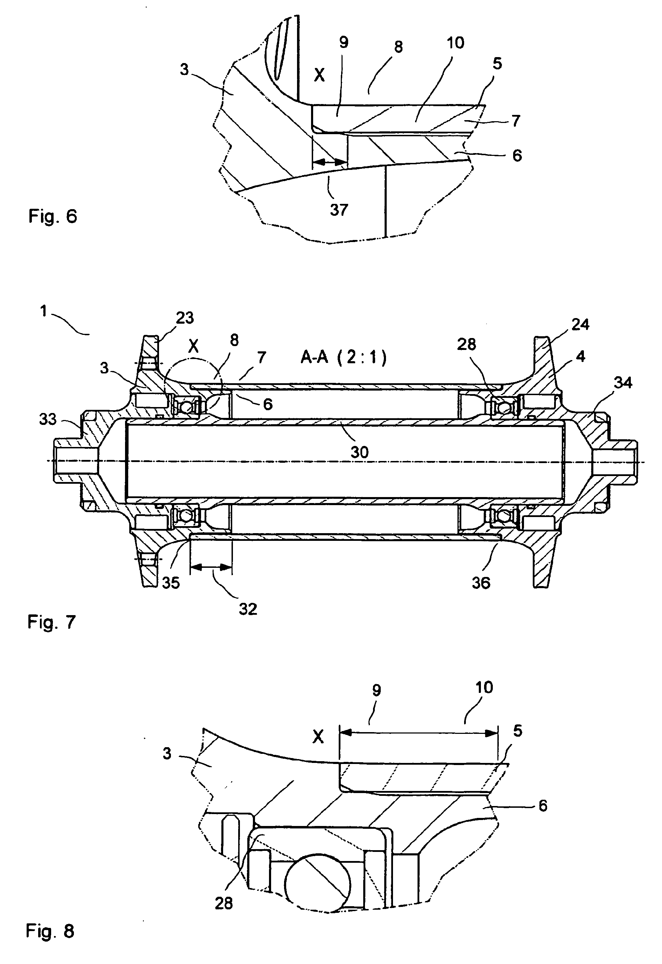

In Figur 6 ist eine vergrößerte Darstellung des Details "X" aus Figur 5 dargestellt, wobei ein Teil des Überlappungsbereich 8 mit dem Mittelteil 5 und der Endeinheit 3 im Querschnitt dargestellt ist. Deutlich erkennbar ist, dass an dem Überlappungsbereich 8 ein Führungsabschnitt 9 und ein Klebeabschnitt 10 vorgesehen sind, wobei die Passgenauigkeit des Einsteckabschnitts 6 und des Aufsteckabschnitts 7 in dem Führungsabschnitt 9 erheblich größer ist als in dem Klebeabschnitt 10. In dem Klebeabschnitt 10 ist ein definierter radialer Spalt zwischen dem Einsteckabschnitt 6 und dem Aufsteckabschnitt 7 vorgesehen. Der Spalt gewährleistet das definierte Aufbringen einer Klebeschicht, sodass ein dauerhaft sicherer Sitz des Mittelteils 5 an der Endeinheit 3 sichergestellt werden kann.

Ein erheblicher Vorteil der Konstruktion ist, dass der axial weiter innen vorgesehene Klebebereich 10 eine zuverlässige Klebeverbindung zwischen dem Mittelteil 5 und den Endeinheiten 3 und 4 gewährleistet, während der Führungsabschnitt 9 bzw. die an beiden Enden 35, 36 des Mittelteils 5 vorgesehenen Führungsabschnitte 9 für einen definierten Sitz bei der Montage sorgen, sodass ein aufwendige Justage beim Kleben der einzelnen Gehäuseteile unterbleiben kann.

Figur 7 zeigt eine Vorderradnabe als erfindungsgemäße Nabe 1 in einem Querschnitt. Die Nabe 1 verfügt über Endeinheiten 3 und 4 und einem dazwischen angeordneten Mittelteil 5. An der Endeinheit 3 ist der Nabenflansch 23 und an der Endeinheit 4 der Nabenflansch 24 vorgesehen. Adapterstücke 33 und 34 schließen sich an den beiden Ende der Endeinheiten 3 und 4 an, um die Aufnahme der Vorderradnabe 1 an einer Gabel bzw. Federgabel 104 zu gewährleisten.

Überlappungsbereiche 8 sind an den beiden axialen Enden 35, 36 des Mittelteils 5 vorgesehen, an denen jeweils Einsteckabschnitte 6 in die Aufsteckabschnitte 7 der Nabenhülse 5 hineinragen. An den beiden axialen Enden 35 und 36 des Mittelteils 5 erstreckt sich jeweils der Überlappungsbereich 8 über eine axiale Breite 32, die sich aus der axialen Breite 37 des Führungsabschnitts 9 und der axialen Breites 38 des Klebeabschnitts 10 zusammensetzt.

Figur 8 zeigt das Detail "X" aus Figur 7 stark vergrößert. Hier ist auch das Lager 28 an der Endeinheit 3 erkennbar. Der Führungsabschnitt 9 erstreckt sich über eine axiale Breite 37 und der Klebeabschnitt 10 erstreckt sich über eine axiale Breite 38, die zusammengenommen die axiale Breite 32 ergeben. Während die axiale Breite 37 des Führungsabschnitts 9 hier etwa 2 mm beträgt, kann die axiale Breite des Klebeabschnitts 10 im dargestellten Ausführungsbeispiel zwischen etwa 5 und 10 mm betragen. Dadurch wird eine sichere Klebeverbindung gewährleistet.

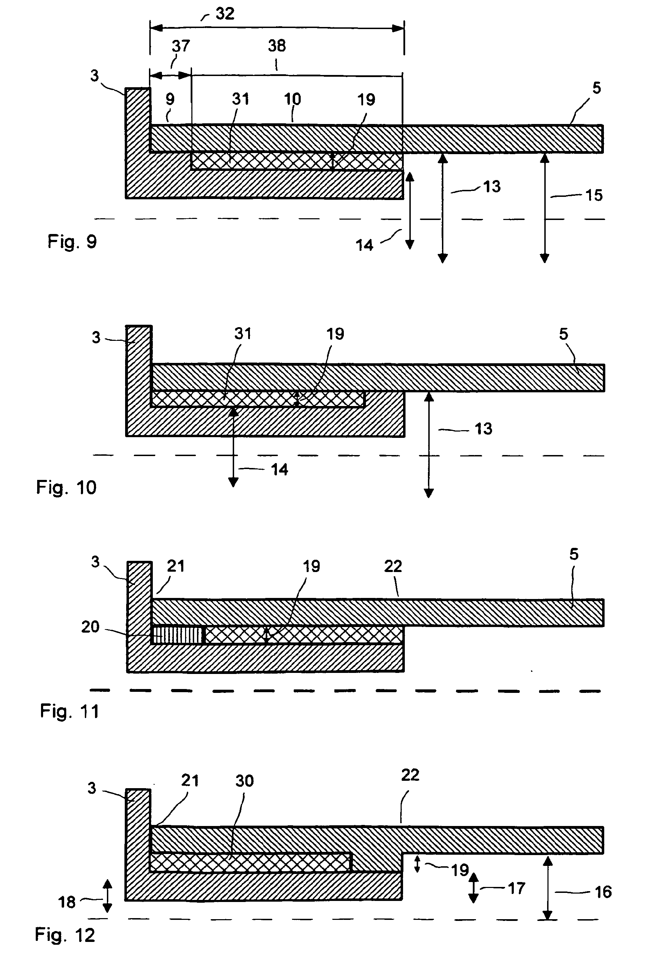

In den Figuren 9 bis 12 sind unterschiedliche Varianten dargestellt, wie eine Endeinheit 3 bzw. 4 mit einem Mittelteil 5 verbunden werden kann.

In Fig. 9 wird in einer schematischen Darstellung die prinzipielle Verbindungsart gemäß der Figuren 6 und 8 gezeigt. Deutlich erkennbar ist, dass an dem Einsteckabschnitt 6 der Endeinheit 3 zwei unterschiedliche Durchmesserbereiche 13 und 14 vorgesehen sind. An dem Führungsabschnitt 9 weist der Einsteckabschnitt 6 einen größeren Außendurchmesser 13 auf als der kleinere Außendurchmesser 14 des Einsteckabschnitts 6. Der Innendurchmesser 15 des Mittelteils 5 ist hier über den Überlappungsbereich 8 konstant. Vorzugsweise ist der Innendurchmesser 15 des Mittelteils 5 hier über seine gesamten Länge konstant. Eingezeichnet ist in Figur 9 auch die Klebeschicht 31 in dem Klebeabschnitt 10.

Fig. 10 zeigt eine Variante, bei der ebenfalls zwei Durchmesserabschnitte mit unterschiedlichen Außendurchmessern 13 und 14 an dem Einsteckabschnitt 6 der Endeinheit 3 bzw. 4 vorgesehen sind. Im Unterschied zur Ausführung nach Figur 9 ist der Bereich mit vergrößertem Außendurchmesser 13 hier nicht am axial äußeren Ende des Überlappungsbereichs 8, sondern am axial inneren Ende des Überlappungsbereichs 8 vorgesehen.

Die Ausgestaltung nach Figur 9 hat gegenüber der Variante nach Fig. 10 den Vorteil, dass die Abstände der Führungsabschnitte 9 an beiden Enden des Mittelteils 5 größer sind, sodass mit geringerem Aufwand die gleiche Genauigkeit erzielbar ist, wie bei der Ausgestaltung gemäß Fig. 10.

In Fig. 11 ist eine andere Variante abgebildet, bei der der Einsteckabschnitt 6 der Endeinheit 3 einen konstanten Außendurchmesser 18 aufweist. Der Aufsteckabschnitt 7 des Mittelteils 5 weist hier einen verringerten Innendurchmesser 17 am Führungsabschnitt 9 auf. Der verringerte Innendurchmesser 17 wird hier durch eine Hülse 20 realisiert, die beispielsweise als metallische Hülse ausgeführt sein kann. Die Hülse 20 kann in das Innere des Mittelteils 5 eingeklebt sein, kann aber auch direkt bei der Herstellung des Mittelteils 5 eingearbeitet werden. Vorzugsweise wird die Hülse 20 am dem axial äußeren Ende angeordnet, wie es in Fig. 11 abgebildet ist. Möglich ist es aber auch, die Hülse 20 axial innen anzuordnen, sodass sich eine Struktur wie in Fig. 10 ergibt.

Fig. 12 zeigt eine Variante, bei der der Aufsteckabschnitt zwei Durchmesserbereiche 15 und 16 aufweist. Hierbei ist der Bereich mit verkleinertem Innendurchmesser 17 einstückig mit der Nabenhülse 5 gefertigt.

In Figur 12 ist beispielhaft auch die Durchmesserdifferenz 19 eingezeichnet, die auch bei den Ausführungsbeispielen gemäß der anderen Figuren vorhanden ist. Vorzugsweise beträgt die Durchmesserdifferenz etwa 0,1 bis 0,3 und vorzugsweise etwa 0,2 mm.

Möglich ist auch der Aufbau einer Nabe, bei der das Mittelteil auf wenigstens einer Seite in ein Endstück eingesteckt und nicht darauf aufgesteckt ist. Dabei sind auch zwei Steckabschnitte vorgesehen. Einen Einsteckabschnitt weist ein Ende des Mittelteils auf und an dem Nabengehäuse bzw. der Endeinheit ist ein Aufsteckabschnitt ausgebildet.

Beide axialen Enden des Mittelteils können in allen Ausgestaltungen gleich oder unterschiedlich ausgebildet sein. In allen Fällen wirken zwei Steckabschnitte zusammen, von denen einer als Einsteckabschnitt und einer als Aufsteckabschnitt ausgebildet sind. Daran sind ein Führungsabschnitt und ein Klebeabschnitt vorgesehen.

Insgesamt stellt die Erfindung eine vorteilhafte Nabe zur Verfügung, die eine hohe Stabilität mit einem geringen Gewicht kombiniert. Die Fertigung ist einfach und aufgrund des Überlappungsbereiches von dem Einsteck- und dem Aufsteckabschnitt und durch den Führungsabschnitt kann eine besonders hohe Montagefreundlichkeit und Genauigkeit erzielt werden.

### Bezugszeichenliste:

- 1: Nabe
- 2: Nabengehäuse
- 3: Endeinheit
- 4: Endeinheit
- 5: Mittelteil, Nabenhülse
- 6: Einsteckabschnitt
- 7: Aufsteckabschnitt
- 8: Überlappungsbereich
- 9: Führungsabschnitt
- 10: Klebeabschnitt
- 11: Durchmessertoleranz
- 12: Durchmessertoleranz
- 13: Außendurchmesser, größerer
- 14: Außendurchmesser, kleinerer
- 15: Innendurchmesser, konstant
- 16: Innendurchmesser, größerer
- 17: Innendurchmesser, kleinerer
- 18: Außendurchmesser, konstant
- 19: Durchmesserdifferenz
- 20: Hülse
- 21: axiales Ende von 8
- 22: axiales Ende von 8
- 23: Nabenflansch
- 24: Nabenflansch
- 25: Rotor
- 26: Scheibenbremsenaufnahme
- 27: Speichenloch
- 28: Lager
- 29: Zahnscheibenfreilauf
- 30: Achse
- 31: Klebeschicht
- 32: Breite
- 33: Adapterstück
- 34: Adapterstück
- 35: Ende
- 36: Ende
- 37: axiale Breite
- 38: axiale Breite
- 100: Fahrrad
- 101: Vorderrad
- 102: Hinterrad
- 103: Rahmen
- 104: Federgabel
- 105: Hinterraddämpfer
- 106: Lenker
- 107: Sattel
- 108: Scheibenbremse
- 109: Speiche
- 110: Felge

## Patentansprüche

1. Nabe (1) mit einem Nabengehäuse (2),
wobei das Nabengehäuse (2) zwei Endeinheiten (3, 4) und wenigstens ein Mittelteil (5) umfasst,
wobei das Mittelteil (5) zwischen den Endeinheiten (3, 4) angeordnet und daran aufgenommen ist,
**dadurch gekennzeichnet,**
**dass** wenigstens eine Endeinheit (3, 4) einen rohrförmigen Einsteckabschnitt (6) umfasst, auf den das Mittelteil (5) mit einem rohrförmigen Aufsteckabschnitt (7) aufgesteckt ist, wobei sich der Einsteckabschnitt (6) und der Aufsteckabschnitt (7) in einem Überlappungsbereich (8) überlappen und in dem Überlappungsbereich (8) ein Führungsabschnitt (9) und ein Klebeabschnitt (10) vorgesehen sind, und dass an dem Führungsabschnitt (10) eine geringere Durchmessertoleranz (11) zwischen dem Einsteckabschnitt (6) und dem Aufsteckabschnitt (7) als an dem Klebeabschnitt (10) vorgesehen ist.

2. Nabe (1) nach Anspruch 1, wobei der Einsteckabschnitt (6) an dem Überlappungsbereich (8) gestufte Außendurchmesser (13, 14) aufweist und/oder wobei der Aufsteckabschnitt (7) einen konstanten Innendurchmesser (15) aufweist.

3. Nabe (1) nach mindestens einem der vorhergehenden Ansprüche, wobei der Einsteckabschnitt (6) und der Aufsteckabschnitt (7) runde Querschnitte aufweisen.

4. Nabe (1) nach mindestens einem der vorhergehenden Ansprüche, wobei die Durchmesserdifferenz (19) zwischen dem Innendurchmesser (15) des Aufsteckabschnitts (6) und dem Außendurchmesser (14) des Einsteckabschnitts (6) in dem Klebeabschnitt (10) zwischen 0,2% und 1,5% des Innendurchmessers (15) des Aufsteckabschnitts (6) beträgt.

5. Nabe (1) nach mindestens einem der vorhergehenden Ansprüche, wobei eine axiale Breite (36) des Führungsabschnitts (9) kleiner als eine axiale Breite (37) des Klebeabschnitts (37) ist.

6. Nabe (1) nach mindestens einem der vorhergehenden Ansprüche, wobei der Mittelteil (5) wenigstens teilweise aus wenigstens einem Faserverbundwerkstoff besteht.

7. Nabe (1) nach mindestens einem der vorhergehenden Ansprüche, wobei der Führungsabschnitt (9) an einem axialen Ende (21, 22) des Überlappungsbereichs (8) angeordnet ist.

8. Nabe (1) nach mindestens einem der vorhergehenden Ansprüche, wobei der Führungsabschnitt (9) an einem axialen Ende des Mittelteils (5) vorgesehen ist.

9. Nabe (1) nach mindestens einem der vorhergehenden Ansprüche, wobei der Führungsabschnitt (9) axial weiter außen als der Klebeabschnitt (10) vorgesehen ist.

10. Nabe (1) nach mindestens einem der vorhergehenden Ansprüche, wobei der Aufsteckabschnitt (7) an dem Überlappungsbereich (8) gestufte Innendurchmesser (16, 17) aufweist und/oder wobei der Einsteckabschnitt (6) einen konstanten Außendurchmesser (18) aufweist.

11. Nabe (1) nach mindestens einem der vorhergehenden Ansprüche, wobei an dem Mittelteil (5) wenigstens eine Hülse (20) aufgenommen ist, welche insbesondere metallisch ausgebildet ist.

12. Nabe (1) mit einem Nabengehäuse (2),
wobei das Nabengehäuse (2) zwei Endeinheiten (3, 4) und wenigstens ein Mittelteil (5) umfasst,
wobei das Mittelteil (5) zwischen den Endeinheiten (3, 4) angeordnet und daran aufgenommen ist,
wobei wenigstens eine Endeinheit (3, 4) einen rohrförmigen Aufsteckabschnitt umfasst, in den das Mittelteil (5) mit einem rohrförmigen Einsteckabschnitt eingesteckt ist, wobei
sich der Einsteckabschnitt und der Aufsteckabschnitt in einem Überlappungsbereich (8) überlappen und in dem
Überlappungsbereich (8) ein Führungsabschnitt (9) und ein Klebeabschnitt (10) vorgesehen sind, **dadurch gekennzeichnet, dass** an dem Führungsabschnitt (10) eine geringere Durchmessertoleranz (11) zwischen dem Einsteckabschnitt und dem Aufsteckabschnitt als an dem Klebeabschnitt (10) vorgesehen ist.

## Claims

1. Hub (1) having a hub body (2),
the hub body (2) comprising two end units (3, 4) and at least one center part (5),
wherein the center part (5) is disposed between and received at the end units (3, 4),
**characterized in**
**that** at least one end unit (3, 4) comprises a tubular inserting portion (6) onto which the center part (5) comprising a tubular slip-on portion (7) is pushed wherein the inserting portion (6) and the slip-on portion (7) overlap in an overlapping region (8) and a guiding portion (9) and a gluing portion (10) are provided in the overlapping region (8), and that the guiding portion (10) is provided with a diameter tolerance (11) that is lower between the inserting portion (6) and the slip-on portion (7) than at the gluing portion (10).

2. The hub (1) according to claim 1 wherein the inserting portion (6) has stepped outer diameters (13, 14) at the overlapping region (8) and/or wherein the slip-on portion (7) has a constant inner diameter (15).

3. The hub (1) according to at least one of the preceding claims wherein the inserting portion (6) and the slip-on portion (7) are round in cross-section.

4. The hub (1) according to at least one of the preceding claims wherein the diameter difference (19) between the inner diameter (15) of the slip-on portion (7) and the outer diameter (14) of the inserting portion (6) in the gluing portion (10) is between 0.2 % and 1.5 % of the inner diameter (15) of the slip-on portion (7).

5. The hub (1) according to at least one of the preceding claims wherein an axial width (36) of the guiding portion (9) is smaller than an axial width (37) of the gluing portion (37).

6. The hub (1) according to at least one of the preceding claims wherein the center part (5) consists at least in part of at least one fibrous composite material.

7. The hub (1) according to at least one of the preceding claims wherein the guiding portion (9) is disposed at an axial end (21, 22) of the overlapping region (8).

8. The hub (1) according to at least one of the preceding claims wherein the guiding portion (9) is provided at an axial end of the center part (5).

9. The hub (1) according to at least one of the preceding claims wherein the guiding portion (9) is provided axially farther outwardly than the gluing portion (10).

10. The hub (1) according to at least one of the preceding claims wherein the slip-on portion (7) has stepped inner diameters (16, 17) at the overlapping region (8) and/or wherein the inserting portion (6) has a constant outer diameter (18).

11. The hub (1) according to at least one of the preceding claims wherein at least one sleeve (20) which is in particular configured metallic is received at the center part (5).

12. Hub (1) having a hub body (2),
the hub body (2) comprising two end units (3, 4) and at least one center part (5),
the center part (5) being disposed between and received at the end units (3, 4)
wherein at least one end unit (3, 4) comprises a tubular slip-on portion into which the center part (5) is pushed with a tubular inserting portion, wherein the inserting portion and the slip-on portion overlap in an overlapping region (8) and a guiding portion (9) and a gluing portion (10) are provided in the overlapping region (8),
**characterized in**
**that** the guiding portion (10) is provided with a diameter tolerance (11) that is lower between the inserting portion and the slip-on portion than at the gluing portion (10).

## Revendications

1. Moyeu (1) avec une enveloppe de moyeu (2),
l'enveloppe de moyeu (2) comprenant deux unités d'extrémité (3, 4) et au moins une partie centrale (5),
la partie centrale (5) étant agencée entre les unités d'extrémités (3, 4) et montée sur celles-ci,
**caractérisé en ce**
**qu'**au moins une unité d'extrémité (3, 4) comprend une section d'insertion (6) de forme tubulaire, sur laquelle vient s'emboîter la partie centrale (5) avec une section d'emmanchement (7) de forme tubulaire, la section d'insertion (6) et la section d'emmanchement (7) se recouvrant en une zone de recouvrement (8), et une section de guidage (9) et une section de collage (10) étant prévues dans la zone de recouvrement (8), et en ce qu'est prévue, au niveau de la section de guidage (10), une tolérance sur diamètre (11) entre la section d'insertion (6) et la section d'emmanchement (7) moins importante qu'au niveau de la section de collage (10).

2. Moyeu (1) selon la revendication 1, la section d'insertion (6) présentant au niveau de la zone de recouvrement (8) des diamètres extérieurs (13, 14) étagés et/ou la section d'emmanchement (7) présentant un diamètre intérieur (15) constant.

3. Moyeu (1) selon au moins l'une quelconque des revendications précédentes, la section d'insertion (6) et la section d'emmanchement (7) présentant des sections transversales circulaires.

4. Moyeu (1) selon au moins l'une quelconque des revendications précédentes, la tolérance sur diamètre (19) entre le diamètre intérieur (15) de la section d'emmanchement (7) et le diamètre extérieur (14) de la section d'insertion (6) étant, dans la section de collage (10), de 0,2 % à 1,5 % du diamètre intérieur (15) de la section d'emmanchement (7).

5. Moyeu (1) selon au moins l'une quelconque des revendications précédentes, une largeur axiale (36) de la section de guidage (9) étant plus petite qu'une largeur axiale (37) de la section de collage (37).

6. Moyeu (1) selon au moins l'une quelconque des revendications précédentes, la partie centrale (5) se composant au moins partiellement d'au moins un matériau composite à base de fibres.

7. Moyeu (1) selon au moins l'une quelconque des revendications précédentes, la section de guidage (9) étant agencée à une extrémité axiale (21, 22) de la zone de recouvrement (8).

8. Moyeu (1) selon au moins l'une quelconque des revendications précédentes, la section de guidage (9) étant prévue à une extrémité axiale (21, 22) de la partie centrale (5).

9. Moyeu (1) selon au moins l'une quelconque des revendications précédentes, la section de guidage (9) étant prévue, axialement, plus à l'extérieur que la section de collage (10).

10. Moyeu (1) selon au moins l'une quelconque des revendications précédentes, la section d'emmanchement (7) présentant, au niveau de la zone de recouvrement (8), des diamètres intérieurs (16, 17) étagés et/ou la section d'insertion (6) présentant un diamètre extérieur (18) constant.

11. Moyeu (1) selon au moins l'une quelconque des revendications précédentes, au moins une gaine (20) étant montée sur la partie centrale (5), ladite gaine (20) étant conçue notamment en métal.

12. Moyeu (1) avec une enveloppe de moyeu (2),
l'enveloppe de moyeu (2) comprenant deux unités d'extrémité (3, 4) et au moins une partie centrale (5),
la partie centrale (5) étant agencée entre les unités d'extrémités (3, 4) et montée sur celles-ci,
au moins une unité d'extrémité (3, 4) comprenant une section d'emmanchement de forme tubulaire, dans laquelle vient s'insérer la partie centrale (5) avec une section d'insertion de forme tubulaire, la section d'insertion et la section d'emmanchement se recouvrant en une zone de recouvrement (8) et une section de guidage (9) et une section de collage (10) étant prévues dans ladite zone de recouvrement (8),
**caractérisé en ce**
**qu'**est prévue, au niveau de la section de guidage (10), une tolérance sur diamètre (11) entre la section d'insertion et la section d'emmanchement moins importante qu'au niveau de la section de collage (10).
